(19) Europäisches Patentamt
European Patent Office
Office européen des brevets

(11) EP 2 846 477 A1

(12) EUROPEAN PATENT APPLICATION
published in accordance with Art. 153(4) EPC

(43) Date of publication:
11.03.2015 Bulletin 2015/11

(51) Int Cl.:
*H04B 7/24* (2006.01)

(21) Application number: 12875894.3

(22) Date of filing: 04.05.2012

(86) International application number:
PCT/CN2012/075066

(87) International publication number:
WO 2013/163809 (07.11.2013 Gazette 2013/45)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Siemens Aktiengesellschaft
80333 München (DE)

(72) Inventors:
• YUAN, Yong
  Beijing 102208 (CN)
• YU, Dan
  Beijing 100102 (CN)

(74) Representative: Isarpatent
Patent- und Rechtsanwälte
Friedrichstrasse 31
80801 München (DE)

(54) **RFID SYSTEM, READER IN RFID SYSTEM, ADDRESSING METHOD FOR ANTENNA IN RFID SYSTEM AND CASCADED ANTENNAS IN RFID SYSTEM**

(57)    The invention discloses a RFID system, a reader in the RFID system, an addressing method of antenna in the RFID system and cascade antenna in the RFID system. The RFID system comprises a reader and a plurality of antennas, the antennas cascade through the cable order, and RF input port of the first antenna are connected electrically to antenna port of the reader, the reader is used for measuring distance between electronic label to be read/wrote and the antenna port, and determining which antenna to read / write the electronic label according to the distance. The application of the technical scheme in the invention, not only can extend the number of antennas without increasing the number of readers, also does not need complex network, but also can determine which antenna read/write electronic label without the need of special control signal, so as to addressing the antenna accurately. Further, because without the need of complex network and special control signal, which can greatly save cost.

Fig. 3

**Description**

<u>Technical field</u>

The present invention relates to the technical field of radio frequency identification (RFID), in particular to an RFID system, a reader in an RFID system, an addressing method for an antenna in an RFID system, and cascaded antennas in an RFID system.

<u>Background art</u>

Radio frequency identification (RFID) technology is an automatic identification technology based on the principle of radio frequency identification, in which a target object is automatically identified and associated data is acquired by means of radio frequency (RF) signals, with no human intervention needed for the identification operation. RFID technology can identify fast-moving objects, and multiple labels simultaneously, in a quick and convenient operation.

An RFID system is a wireless system, generally including electronic labels (tags), a reader and an antenna. The electronic labels can be attached to objects that are being controlled, detected or tracked. Each label has a unique electronic code, which is used to uniquely identify the object being controlled, detected or tracked. The reader, which may be handheld or fixed in position, reads/writes information stored in the electronic labels via the antenna, in order to control, detect or track the objects to which the various labels are attached. The antenna is electrically connected to the reader, and used to transmit RF signals between the reader and the various electronic labels.

RFID technology is a breakthrough in technology, which at the present time is gradually being applied in fields such as logistics and supply management, production and assembly, aircraft baggage handling, mail, express parcel handling, file tracking, library management, animal identification, sports timing, access control, electronic tickets, and automatic road charging. In the retail industry, it is the Smart Shelf unit deployment solution based on RFID that is closest to firms' actual business while also being most widely accepted by firms.

In an existing Smart Shelf unit based on RFID, an antenna is positioned on each level of the shelf unit. Each antenna must be connected electrically to a reader via an RF output port. When an item of merchandise is placed on a particular level of the Smart Shelf unit, the reader reads/writes information stored in an electronic label attached to the item via the antenna of that level, and thereby performs operations at the level of applications such as logistical tracking and customer volume analysis.

However, the readers in common use at present generally only have a limited number of RF output ports, for instance 1, 2, 4 or 8. Since each RF output port can only be connected to one antenna, the number of antennas which can be connected to each reader is limited, and cannot be expanded. If it is desired to expand the number of antennas, it is necessary to increase the number of readers, and this will inevitably cause an increase in costs.

Thus far, two technical solutions have been proposed in the prior art to enable the number of antennas to be expanded without increasing the number of readers.

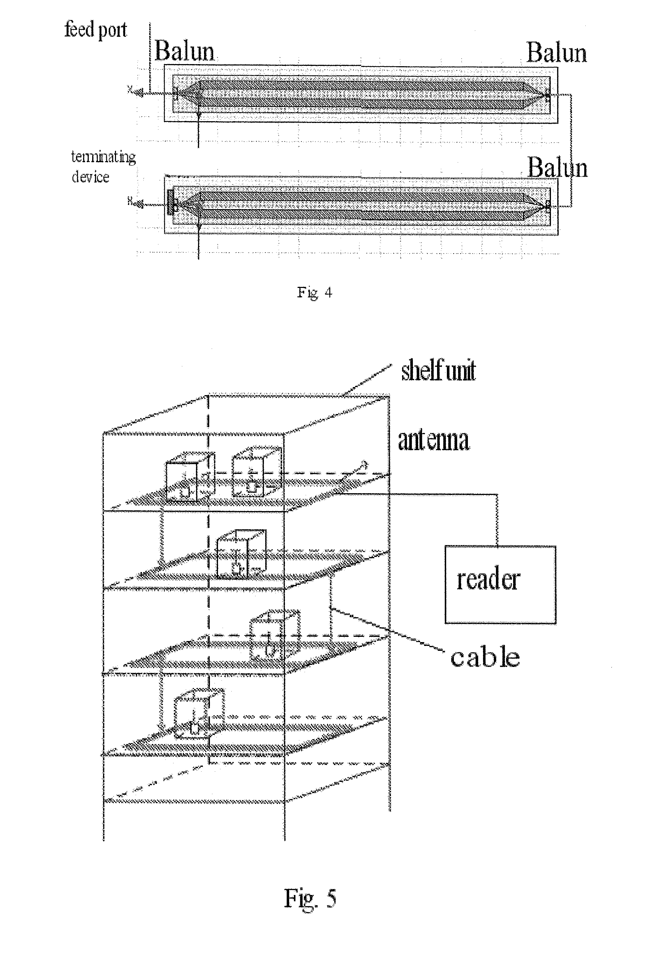

One solution is the RF networking technical solution proposed by the science and technology company VUE, shown in Fig. 1. As Fig. 1 shows, the technical solution introduces two types of RF device, namely RF switches and an RF router, wherein each one of N (where N is a positive integer) Smart Shelf units is connected to one RF switch, these switches are connected to a reader via an RF router, and the reader is switched to the antennas deployed on different shelf units by means of the RF switches and the RF router. However, with such a centralized Smart Shelf unit deployment solution, networking is very difficult, line installations are complex and costs are very high.

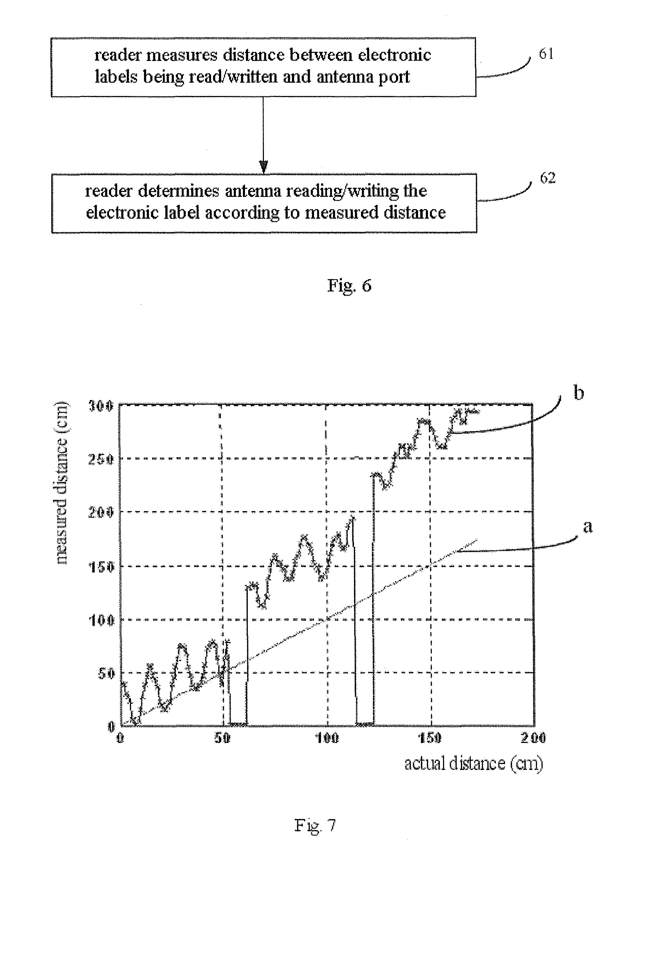

The other technical solution is the schematic diagram of an RFID reading system in the prior art shown in Fig. 2. As Fig. 2 shows, the RFID reading system comprises an RFID reader and multiple RFID antenna modules. The RFID antenna modules may be individually deployed on each level of the Smart Shelf unit. The RFID reader comprises an RF signal generator, an RF output port and a select signal generator, wherein the RF signal generator is used to generate RF signals and supply these to the RF output port. In this system, an RF input port of a first RFID antenna module is electrically connected to the RF output port of the RF reader via an RF signal communication link, an RF input port of a second RFID antenna module is electrically connected to an RF output port of the first RFID antenna module via an RF signal communication link, and so on. Thus, the single RF output port of the reader can be electrically connected to multiple RFID antenna modules. The system uses the select signal generator of the reader to generate a select signal, which is then transmitted to one or more RFID antenna modules via a specific line (shown by the dotted line in Fig. 2). However, such a system needs to use special select signals (SS) to switch to different antennas, and it is necessary for a special switching device to be integrated in each RFID antenna module, or for a switching device to be used separately, for the purpose of analysing the select signal (SS), so the inevitable result is an increase in cost.

The issues which most concern users of Smart Shelf units are being able to expand the number of antennas without increasing the number of readers, and being able to control the cost of each reading point (one reading point corresponds to the same level of multiple shelf units). In general, a user hopes to keep the cost of each reading point within a given range. To achieve this objective, it is necessary to connect as many antennas as possible to a reader. For instance, in one application scenario there are 5 shelf units, each of which has 4 levels, while the reader has 4 antenna ports. The reader costs 1600 Euros, while the antenna costs 20 Euros. If the user wishes to keep the cost of each reading point within 100 Euros, then each antenna port of the reader should be connected to at least 5 antennas. However, if each antenna port of the reader is to be connected to multiple antennas, it is necessary for the reader to have addressing capability, to determine which antenna has read/written an electronic label.

There is therefore a need to propose a technical solution to enable the number of antennas to be expanded without increasing the number of readers, and to enable accurate addressing of antennas without complex networking, in order to keep costs within a predetermined range.

Content of the invention

In view of the above, the embodiments of the present invention propose an RFID system, a reader in an RFID system, an addressing method for an antenna in an RFID system, and cascaded antennas in an RFID system, which enable the number of antennas to be expanded without increasing the number of readers, and enable accurate addressing of antennas without complex networking or special control signals, in order to reduce the total cost.

To achieve the above object, the technical solution of the present invention is specifically implemented as follows:

An RFID system, comprising a reader and multiple antennas, the multiple antennas being cascaded in sequence via a cable, and an RF input port of a first antenna being electrically connected to an antenna port of the reader, the reader being used to measure the distance between an electronic label being read/written and the antenna port, and to determine the antenna reading/writing the electronic label according to the distance.

The length of the cable is determined by an error introduced by measurement of phase by the reader, and phase shift speed during transmission of an RF signal on the cable and antenna.

The number of antennas connected to the reader is determined according to an output power of the antenna port of the reader, an output power of the antennas, and an insertion loss (IL) of the antennas and the cable used to cascade antennas.

The multiple antennas have a coplanar stripline (CPS) structure, a balun connector is connected to both ends of each antenna, and the cable between two adjacent antennas connects these two antennas via the balun connectors.

A reader in an RFID system, applied in an RFID system comprising multiple antennas cascaded in sequence via a cable, the reader comprising an antenna port to be electrically connected to an RF input port of a first antenna, the reader further comprising a measuring module, for measuring the distance between an electronic label being read/written and the antenna port, and for determining the antenna reading/writing the electronic label according to the distance.

An addressing method for an antenna in an RFID system, applied in an RFID system comprising a reader and multiple antennas cascaded in sequence via a cable, wherein an antenna port of the reader is electrically connected to an RF input port of a first antenna, and the method comprises:

the reader measuring the distance between an electronic label being read/written and the antenna port;

the reader determining the antenna reading/writing the electronic label according to the distance.

The step of the reader determining the antenna reading/writing the electronic label according to the distance comprises: the reader determining the antenna reading/writing the electronic label according to the measured distance, antenna length and cable length.

Cascaded antennas in an RFID system, comprising multiple antennas cascaded in sequence via a cable, and applied in an RFID system comprising a reader, an RF input port of a first antenna being electrically connected to an antenna port of the reader, the multiple antennas having a coplanar stripline (CPS) structure, a balun connector being connected to both ends of each antenna, and the cable between two adjacent antennas being connected to the two antennas via the balun connectors.

It can be seen from the above technical solution that the use of the technical solution proposed in the embodiments of the present invention enables the number of antennas to be expanded without increasing the number of readers, and with no need for complex networking; also, it is possible to determine which antenna has read/written an electronic label, so as to accurately address antennas, without a special control signal. Furthermore, the total cost can be greatly reduced because there is no need for complex networking or special control signals.

Description of the accompanying drawings

Exemplary embodiments of the present invention are described in detail below by referring to the accompanying drawings, to give those skilled in the art a clearer understanding of the abovementioned and other features and advantages of the present invention. Drawings:

Fig. 1 shows an RF networking technical solution proposed by the science and technology company VUE;

Fig. 2 shows a schematic diagram of an RFID reading system in the prior art;

Fig. 3 shows a schematic diagram of an RFID system in the embodiments of the present invention;

Fig. 4 shows a schematic diagram of a cascaded antenna structure in the embodiments of the present invention;

Fig. 5 shows a schematic diagram of an application scenario for an RFID system in the embodiments of the present invention;

Fig. 6 shows a flow chart of an addressing method for an antenna in an RFID system in the embodiments of the present invention;

Fig. 7 shows a schematic diagram of the result of distance measurement in the embodiments of the present invention.

Particular embodiments

The present invention is explained in further detail below with reference to embodiments and the accompanying drawings. It should be understood that the particular embodiments described here are intended merely to explain the present invention, not to define it.

Fig. 3 shows a schematic diagram of an RFID system in the embodiments of the present invention. As Fig. 3 shows, the RFID system comprises a reader and multiple antennas. The multiple antennas are cascaded in sequence via cables, with an RF input port of a first antenna being electrically connected to an antenna port of the reader. The reader is used to measure the distance between an electronic label being read/written and the antenna port, and to determine the antenna reading/writing the electronic label according to the distance. In Fig. 3, in addition to the antenna port, the reader further comprises a measuring module, for measuring the distance between a label being read/written and the antenna port, and determining the antenna reading/writing the label according to the distance. In another embodiment of the present invention, the reader may further comprise a storage module, for storing information about antenna length and the length of the cables connecting the antennas, etc., so that the measuring module can, after measuring the distance between an electronic label being read/written and the antenna port, determine the antenna reading/writing the electronic label according to the antenna length and the length of the cables connecting the antennas. In this embodiment, the multiple antennas have a coplanar stripline (CPS) structure, a balun connector is connected to both ends of each antenna, and the cable between two adjacent antennas connects these two antennas via the balun connectors.

In the embodiments of the present invention, the distance between an electronic label and the antenna port can be measured by a method from the prior art. In the prior art, the distance between a label and an antenna port is generally measured in the following steps, comprising:

Step A: a reader generates a first emission signal at a first frequency f1 and a second emission signal at a second frequency f2, and sends a combined emission signal to the electronic label;

Step B: the reader obtains a first reception signal at the first frequency f1 at a first time and a second reception signal at the second frequency f2 at a second ) time;

Step C: obtaining a first in-phase component I1 and a first orthogonal component Q1 from the first reception signal, to construct a first signal vector V1 = I1 + jQ1; obtaining a second in-phase component I2 and a second orthogonal component Q2 from the second reception signal, to construct a second signal vector V2 = Q2 + jI2; adding the first signal vector V1 and the second signal vector V2, to obtain a combined reception signal vector V;

Step D: determining the distance between the corresponding electronic label and the antenna port of the reader according to the reception signal vector V.

Of course, other methods may be used in the embodiments of the present invention to measure the distance between a label and the antenna port, but these will not be repeated here.

In the embodiments of the present invention, if the cables connecting antennas are too short, then the parameters used for distance measurement on two adjacent antennas may be extremely close, and this could result in the distances from electronic labels read/written by two adjacent antennas to the antenna port of the reader being roughly the same, so there is no way of determining which antenna read/wrote the electronic label. The cables between the antennas should be sufficiently long so that the parameters used for distance measurement on different antennas are sufficiently separated, to enable the reader to distinguish each antenna. In the embodiments of the present invention, the cable length between antennas is determined by an error introduced by measurement of phase by the reader, and phase shift speed during transmission of an RF signal on a cable and on an antenna. Specifically, the cable length ($Len_{cab}$) is determined by the following formula:

$$Len_{cab} > \frac{2 \times \delta\Phi_{err}}{4\pi \left| \dfrac{f_1}{V_{pa}(f_1)} - \dfrac{f_2}{V_{pa}(f_2)} \right| \times \text{ratio}}, \quad \text{wherein}, \quad ratio = \frac{\dfrac{f_1}{V_{pc}(f_1)} - \dfrac{f_2}{V_{pc}(f_2)}}{\dfrac{f_1}{V_{pa}(f_1)} - \dfrac{f_2}{V_{pa}(f_2)}},$$

where f1 and f2 are two frequencies used when measuring the phase returned by a label, Vpc(fi) is the phase shift speed during transmission of an RF signal of frequency fi on a cable, Vpa(fi) is the phase shift speed during transmission of an RF signal of frequency fi on an antenna, i = 1 or 2, and $\delta\phi_{err}$ is the error introduced by measurement of phase by the reader/writer.

In the embodiments of the present invention, since multiple antennas are connected in sequence in a cascade, one antenna port of the reader can be connected to multiple antennas, to reduce the total cost. Although the required cost in a specific application is lower if the number of antennas connected to one antenna port of the reader is higher, there is a limit to the number of antennas to which the antenna port can be connected. In the embodiments of the present invention, the number of antennas to which one antenna port can be connected is determined according to the output power of the antenna port of the reader, the output power of an antenna, and the insertion loss (IL) of an antenna and of a cable used to cascade antennas. Taking as an example the use of an antenna (the two ends of the antenna being connected to a Balun connector) with a coplanar stripline (CPS) structure in an RFID system, a method for determining the number of antennas to which one antenna port of the reader can be connected comprises the following steps: calculating the insertion loss of each antenna, wherein the insertion loss = 2*insertion loss of balun connector + 2*insertion loss of coaxial-to-coplanar waveguide (coaxial-to-CPW) transmission + insertion loss of internal coplanar stripline (internal CPS antenna). If the insertion loss of the balun connector is 0.5 dB, the insertion loss of the coaxial-to-CPW transmission is 0.1 dB and the insertion loss of the internal CPS is 0.5 dB, then the insertion loss of the antenna is 1.7 dB. According to the formula: (output power of antenna port of reader - n*antenna insertion loss) > antenna output power, the number of antennas n is calculated, where n is a positive integer. If the output power of the antenna port of the reader is 30 dBm and the output power of the antenna is 20 dBm, then after 5 cascaded antennas, when the output power will have decreased to 21.5 dBm = 30 - 1.7 dB*5, the formula above is still satisfied, so each antenna port can be connected to a maximum of 5 cascaded antennas.

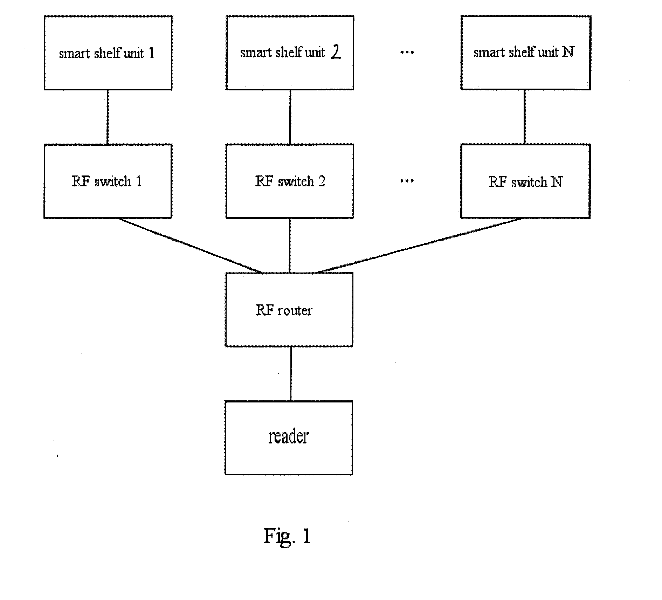

In the embodiments of the present invention, the cables used to cascade the multiple antennas may be coaxial cables, capacitors or inductors. If antennas with a differential structure are used in the RFID system, then a balun connector must also be connected at both ends of each antenna. Fig. 4 shows a schematic diagram of a cascaded antenna structure in the embodiments of the present invention. As Fig. 4 shows, the cascaded antennas comprise multiple antennas cascaded in sequence via cables, and can be applied in an RFID system comprising a reader, with an RF input port of a first antenna being electrically connected to an antenna port of the reader. In Fig. 4, the multiple antennas have a coplanar stripline (CPS) structure, a balun connector is connected at both ends of each antenna, and the cable between two adjacent antennas connects these two antennas via the balun connectors. Fig. 4 only shows the cascade structure of two antennas, as an example for the purpose of illustration. Those skilled in the art can understand that more antennas could be cascaded in accordance with this cascade structure. Since the antenna in this embodiment has a CPS structure, the phase on the antenna is uniformly distributed. Therefore this cascaded antenna structure may be used in an RFID system to determine by a distance measurement method which antenna has read/written an electronic label.

Fig. 5 shows a schematic diagram of an application scenario for an RFID system in the embodiments of the present invention. For instance, the RFID system proposed in the embodiments of the present invention may be applied in a Smart Shelf unit. As Fig. 5 shows, multiple antennas are cascaded in sequence via cables, one antenna is deployed on each level of the shelf unit, and the cascaded antennas are electrically connected to the reader. If the antenna on a particular level of the shelf unit has read/written a label attached to an item of merchandise on that level, then the reader measures the distance between the label and the antenna port of the reader, and determines which antenna read/wrote the label according to the antenna length and cable length. For instance, if the antenna on the third level of the shelf unit has read/written a label, then the distance measured by the reader should be the sum of the lengths of the antennas on the third and fourth levels and the length of the cable between the third and fourth levels. Since the antenna length and cable length are already known, the reader is able to determine that it was the antenna on the third level that read/wrote the label.

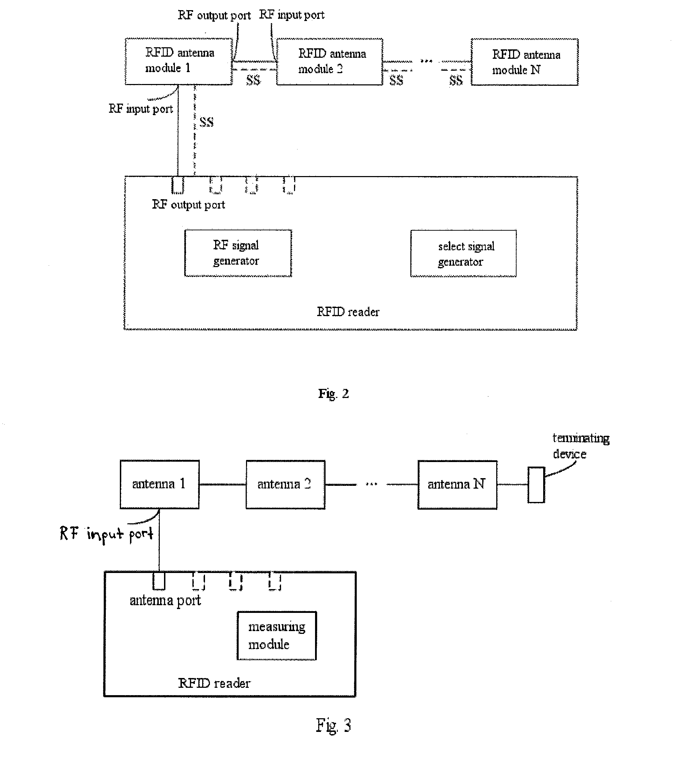

Fig. 6 shows a flow chart for an addressing method for an antenna in an RFID system in the embodiments of the present invention. In the embodiments of the present invention, the method is applied to an RFID system comprising a reader and multiple antennas cascaded in sequence via cables, wherein an antenna port of the reader is electrically connected to an RF input port of a first antenna. As Fig. 6 shows, the method comprises the following steps:

Step 61: the reader measures the distance between an electronic label being read/written and the antenna port.

The specific method of distance measurement used in this step has already been described above, and is not repeated here.

Step 62: the reader determines the antenna reading/writing the electronic label according to the measured distance.

In this step, after measuring the distance between the electronic label being read/written and the antenna port, the reader determines the antenna reading/writing the electronic label according to antenna length and the length of cables connecting antennas.

In this embodiment, the multiple antennas have a coplanar stripline (CPS) structure, a balun connector is connected to both ends of each antenna, and the cable between two adjacent antennas connects these two antennas via the balun connectors.

Fig. 7 shows a schematic diagram of the result of distance measurement in the embodiments of the present invention. As Fig. 7 shows, line a represents the actual distance between an electronic label being read/written and the antenna port of the reader, while line b represents the distance between an electronic label being read/written and the antenna port of the reader as measured using the technical solution proposed in the embodiments of the present invention. It can be seen from Fig. 7 that, although there is a definite error between the actual distance and the measured distance, it is very obvious that different antennas can be distinguished using the embodiments of the present invention, in order to determine which antenna has read/written an electronic label.

It can be seen from the above embodiments that the use of the technical solution proposed in the embodiments of the present invention enables the number of antennas to be expanded without increasing the number of readers, and with no need for complex networking; also, it is possible to determine which antenna has read/written an electronic label, so as to accurately address antennas, without a special control signal. Furthermore, the total cost can be greatly reduced because there is no need for complex networking or special control signals.

The above embodiments are merely preferred embodiments of the present invention, which are not intended to limit it. Any amendments, equivalent substitutions or improvements etc. made within the spirit and principles of the present invention shall be included in the scope of protection thereof.

**Claims**

1. A RFID system, comprises a reader and a plurality of antennas, the antennas cascade through the cable order, and RF input port of the first antenna is connected electrically to antenna port of the reader, **characterized in that** the reader is used for measuring distance between electronic label to be read/written and the antenna port, and determining which antenna to read / write the electronic label according to the distance.

2. The RFID system as claimed in claim 1, **characterized in that**, the cable length is determined by error introduced by the reader measuring the phase, phase shift speed when the RF signal transmits on the cable and the antenna.

3. The RFID system as claimed in claim 1, **characterized in that**, the number of the antennas connected to the readers is determined by the reader antenna port output power, antenna output power, and insertion loss (IL) of the antennas and the cable for cascading the antennas.

4. The RFID system as claimed in claim 1, **characterized in that**, the plurality of the antennas are coplanar strip line (CPS) structure antennas, both ends of each antenna are connected to balun (Balun) connector, the cables between two adjacent antennas connect the two antennas through the Balun connector.

**5.** A reader in RFID system, for RFID system comprising a plurality of antennas cascading through the cable order, the reader comprises antenna ports, for connecting electrically to RF input port of the first antenna, **characterized in that**, the reader further comprises measuring module, for measuring distance between electronic label to be read/written and the antenna port, and determining which antenna to read / write the electronic label according to the distance.

**6.** The reader as claimed in claim 5, **characterized in that**, the cable length is determined by error introduced by the reader measuring the phase, phase shift speed when the RF signal transmits on the cable and the antenna.

**7.** The reader as claimed in claim 5, **characterized in that**, the number of the antennas connected to the reader is determined by the reader antenna port output power, antenna output power, and insertion loss (IL) of antennas and the cable for cascading the antennas.

**8.** An addressing method of antenna in the RFID system, for RFID system comprising reader and a plurality of antennas cascading through the cable order, RF input port of the first antenna is connected electrically to antenna port of the reader, **characterized in that**, the method comprises:

the reader measures distance between electronic label to be read/written and the antenna port;
the reader determines which antenna to read / write the electronic label according to the distance.

**9.** The method as claimed in claim 8, **characterized in that**, the step in which the reader determines which antenna to read / write the electronic label according to the distance comprises: the reader determines which antenna to read / write the electronic label according to the measured distance, the length of antenna and cable length.

**10.** A cascade antenna in RFID system, comprises a plurality of antennas cascading through the cable order, for RFID system comprising reader, RF input port of the first antenna is connected electrically to antenna port of the reader, **characterized in that**, the plurality of the antennas are coplanar strip line (CPS) structure antennas, both ends of each antenna are connected to balun (Balun) connector, the cables between two adjacent antennas connect the two antennas through the Balun connector

```
┌─────────────────┐   ┌─────────────────┐           ┌─────────────────┐
│ smart shelf unit 1 │   │ smart shelf unit 2 │    ···    │ smart shelf unit N │
└─────────────────┘   └─────────────────┘           └─────────────────┘
         │                     │                             │
┌─────────────────┐   ┌─────────────────┐           ┌─────────────────┐
│   RF switch 1    │   │   RF switch 2    │    ···    │   RF switch N    │
└─────────────────┘   └─────────────────┘           └─────────────────┘
           \                  │                   /
            \                 │                  /
             ┌───────────────────────────┐
             │         RF router          │
             └───────────────────────────┘
                           │
             ┌───────────────────────────┐
             │          reader            │
             └───────────────────────────┘
```

Fig. 1

RF output port  RF input port

RFID antenna
module 1

RFID antenna
module 2

RFID antenna
module N

SS          SS     ···    SS

RF input port

SS

RF output port

RF signal
generator

select signal
generator

RFID reader

**Fig. 2**

terminating
device

antenna 1

antenna 2  ···  antenna N

RF input port

antenna port

measuring
module

RFID reader

**Fig. 3**

feed port

Balun

Balun

terminating
device

Balun

Balun

Fig 4

shelf unit

antenna

reader

cable

Fig. 5

EP 2 846 477 A1

| reader measures distance between electronic labels being read/written and antenna port | 61 |

↓

| reader determines antenna reading/writing the electronic label according to measured distance | 62 |

Fig. 6

Fig. 7

11

| INTERNATIONAL SEARCH REPORT | International application No. |
|---|---|
| | PCT/CN2012/075066 |

**A. CLASSIFICATION OF SUBJECT MATTER**

H04B 7/24 (2006.01) i

According to International Patent Classification (IPC) or to both national classification and IPC

**B. FIELDS SEARCHED**

Minimum documentation searched (classification system followed by classification symbols)

IPC: H04B; G06K

Documentation searched other than minimum documentation to the extent that such documents are included in the fields searched

Electronic data base consulted during the international search (name of data base and, where practicable, search terms used)

CNABS; CNTXT; CNKI: RFID, radio frequency ID, radio frequency identification, radio frequency tag, electronic tag, distance, length, range, near-far, interval, ranging, cascade, tandem, reader, antenna

VEN: smart w shelf, RFID, radio w frequency w identif+, radio w tag?, electronic+ or tag, RFID or (radio w frequency w identif+, radio w tag?, electronic+ w tag, distance+, gap, far, near, length, reader?, detector?

**C. DOCUMENTS CONSIDERED TO BE RELEVANT**

| Category* | Citation of document, with indication, where appropriate, of the relevant passages | Relevant to claim No. |
|---|---|---|
| Y | CN 201751904 U (ZTE CORP.), 23 February 2011 (23.02.2011), description, paragraphs [0007]-[0060], and figures 1-6 | 1-10 |
| Y | CN 101142758 A (OMRON CORP.), 12 March 2008 (12.03.2008), description, page 27, line 3 to page 31, line 6, and page 48, line 3 to page 51, line 2, and figure 2 | 1-10 |
| A | JP 2008102662 A (HITACHI LTD.), 01 May 2008 (01.05.2008), the whole document | 1-10 |

☐ Further documents are listed in the continuation of Box C.      ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 January 2013 (28.01.2013) | **14 February 2013 (14.02.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **CHEN, Shaobei** Telephone No.: (86-10) **62411319** |

Form PCT/ISA/210 (second sheet) (July 2009)

# INTERNATIONAL SEARCH REPORT

| International application No. |
| --- |
| **PCT/CN2012/075066** |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:

Independent claim 1 relates to an RFID system, independent claim 5 relates to a reader in an RFID system, independent claim 8 relates to an addressing method for an antenna in an RFID system, and independent claim 10 relates to a cascade antenna in an RFID system; the same or corresponding technical features involved in independent claim 10 and independent claims (1, 5 and 8) only lie in: "an RFID system comprises a reader and a plurality of antennae cascaded according to the cable sequence, and the RF input port of a first antenna is electrically connected to the antenna port of the reader". However, the technical features abovementioned have been disclosed in D1 (see description, paragraphs [0007]-[0060], and figures 1-6): an electronic label system, comprising a reader and a plurality of antenna unit groups, the antenna being cascaded according to the cable sequence, wherein a port of an antenna being electrically connected to the antenna port of the reader; the reader gating the antenna by a logical control unit for addressing; therefore independent claim 10 and independent claims (1, 5 and 8) do not share a same or corresponding special technical feature that makes a contribution over the prior art, and they are not technically linked, do not belong to a single general inventive concept, and therefore do not meet the requirement of unity of invention as defined in PCT Rule 13.1.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## INTERNATIONAL SEARCH REPORT
### Information on patent family members

| | International application No. |
|---|---|
| | **PCT/CN2012/075066** |

| Patent Documents referred in the Report | Publication Date | Patent Family | Publication Date |
|---|---|---|---|
| CN 201751904 U | 23.02.2011 | None | |
| CN 101142758 A | 12.03.2008 | JP 2006284557 A | 19.10.2006 |
| | | KR 20070110064 A | 15.11.2007 |
| | | US 7903022 B2 | 08.03.2011 |
| | | WO 2006095463 A1 | 14.09.2006 |
| | | EP 1863190 A1 | 05.12.2007 |
| | | JP 2009080133 A | 16.04.2009 |
| | | TW 200632354 A | 16.09.2006 |
| | | US 2010076722 A1 | 25.03.2010 |
| | | KR 1038617 B1 | 03.06.2011 |
| | | JP 4265686 B2 | 20.05.2009 |
| | | CN 101142758 B | 27.04.2011 |
| | | US 2008150699 A1 | 26.06.2008 |
| | | JPWO 2006095463 SX | 14.08.2008 |
| | | US 7649491 B2 | 19.01.2010 |
| | | TWI 279574 B | 21.04.2007 |
| | | JP 4265694 B2 | 20.05.2009 |
| JP 2008102662 A | 01.05.2008 | US 2008129643 A1 | 05.06.2008 |
| | | JP 4991240 B2 | 01.08.2012 |
| | | US 7583193 B2 | 01.09.2009 |

Form PCT/ISA/210 (patent family annex) (July 2009)